# EUROPÄISCHE PATENTSCHRIFT

(11) **EP 2 043 896 B1**
(45) Veröffentlichungstag und Bekanntmachung des Hinweises auf die Patenterteilung: **19.05.2010**
(21) Anmeldenummer: 07730160.4
(22) Anmeldetag: 14.06.2007
(51) Int. Cl.: B60W 10/18, B60W 10/20, B60W 30/08

(54) **VERFAHREN UND VORRICHTUNG ZUR VERMEIDUNG UND/ODER MINDERUNG DER FOLGEN VON KOLLISIONEN**
METHOD AND DEVICE FOR AVOIDING AND/OR REDUCING THE CONSEQUENCES OF COLLISIONS
PROCEDE ET DISPOSITIF POUR PREVENIR ET/OU DIMINUER LES CONSEQUENCES DES COLLISIONS

(30) Priorität: 18.07.2006 DE 102006033145
(43) Veröffentlichungstag der Anmeldung: 08.04.2009
(73) Patentinhaber: Robert Bosch GmbH, 70442 Stuttgart (DE)
(72) Erfinder: BORCHERS, Oliver, 50670 Köln (DE)
(86) Internationale Anmeldenummer: PCT/EP2007/055893
(87) Internationale Veröffentlichungsnummer: WO 2008/009519

(56) Entgegenhaltungen:
- EP-A- 0 649 776
- EP-A- 0 891 903
- EP-A- 0 967 121
- EP-B- 1 409 311
- WO-A-2006/053652
- DE-A- 19 647 283

## Beschreibung

### Stand der Technik

Die Erfindung betrifft ein Verfahren und Vorrichtung zur Vermeidung und/oder Minderung der Folgen von Kollisionen, insbesondere bei Kraftfahrzeugen.

Die zunehmende Verbreitung von elektrisch steuerbaren Brems- und Lenkeinrichtungen in Kraftfahrzeugen sowie von Sensoren, die mögliche Hindernisse im Fahrzeugumfeld erfassen, ermöglichen Systeme zur Vermeidung und/oder zur Minderung der Folgen von Kollisionen mit Hindernissen.

Mit Hilfe von Umfelderfassungssystemen wie Radar- und /oder Videosensoren ist es beispielsweise möglich, potenzielle Kollisionen mit Hindernissen frühzeitig zu erkennen. Diese können dann durch rechtzeitige Warnung des Fahrers bzw. durch Einflussnahme auf die Fahrzeugbewegung mittels steuerbarer Brems- sowie Lenkeinrichtungen vermieden werden oder ihre Folgen vermindert werden. Eine besondere Bedeutung haben dabei Sensorsysteme, z.B. ein Videosensor, mit dessen Hilfe Objekte erkannt und/oder klassifiziert werden können. Zu den Sensoren für die Erfassung des Fahrzeugumfelds zählen z.B. Ultraschall-, Radar-, Lidar- und/oder Videosysteme. Als steuerbare Teilsysteme von Bremsanlagen für den aktiven Druckaufbau stehen beispielsweise Hydroaggregate von ESP-Systemen, aktiv ansteuerbare Bremskraftverstärker, elektrohydraulische Bremsanlagen oder künftig elektromechanische Bremsanlagen zur Verfügung. Zur Beeinflussung der Lenkung kommen aktive Lenksysteme oder Steer-by-Wire Systeme (SBW) in Betracht.

Systeme zur Kollisionsvermeidung bzw. Kollisionsfolgenminderung greifen durch einen aktiven, fahrerunabhängigen Brems- und/oder Lenkeingriff in die Bewegung der Fahrzeugs ein.

So beschreibt z.B. die EP 891 903 A2 eine Vorrichtung, die ein Fahrzeug genau dann automatisch bremst, wenn unter Ausnutzung der fahrphysikalischen Grenze eine Kollision mit einem Hindernis nicht mehr zu vermeiden ist.

Die WO 2006/079589 A (Stand der Technik nach Art. 54(3) EPÜ) zeigt einen Ausweichassistenten, bei welchem Maßnahmen zur Berechnung ob eine Kollision durch alleinige Bremsung vermeidbar ist oder nicht, beschrieben sind. Ferner ist eine Lösung angegeben zur Berechnung eines kombinierten Brems- und Lenkeingriffs zum Ausweichen des Hindernisses. Diese Berechnungsvorschläge können auch in der nachfolgenden Vorgehensweise Eingang finden.

Die WO 2006/053652 A beschreibt ein Verfahren zur Verhinderung von Kollisionen. Dabei werden Geschwindigkeit und Bewegungsrichtung eines Fahrzeuges erfasst sowie die Lage von Objekten im Fahrzeugumfeld sowie deren Geschwindigkeit und Bewegungsrichtung detektiert. Die gegenwärtige und zukünftige Lage der Objekte relativ zum Fahrzeug wird bewertet und ein automatischer Lenk- und/oder Bremseingriff kann durch ein Assistenzsystem des Fahrzeugs in Abhängigkeit der Bewertung durchgeführt werden, wenn eine Kollision mit einem Objekt gemäß der Bewertung ohne Systemeingriff unausweichlich ist.

Die EP 0 967 121 A beschreibt ein Verfahren zur Minimierung von Unfallfolgen bei Fahrzeugen. Anhand einer Auswertung kann festgestellt werden, ob eine unvermeidliche Unfallsituation bezüglich eines erkannten Hindernisses vorliegt. Durch ein gezieltes Abbremsen einzelnen Räder des Fahrzeugs und/oder einen automatischen Lenkvorgang wird einerseits eine optimale Geschwindigkeitsreduzierung und auch ein günstiger Aufprallwinkel auf das Hindernis erreicht.

### Vorteile der Erfindung

Die nachfolgend dargestellte Vorgehensweise ermöglicht die Vermeidung bzw. Minderung der Folgen von Unfällen mit Hindernissen durch automatischen Bremseingriff und/oder automatischen Querführungseingriff, z.B. ein Lenkeingriff. Dabei wird eine Analyse der Umfeldsituation vorgenommen, auf deren Basis entschieden wird, ob ein automatischer Querführungseingriff stattfinden soll oder nicht. Ein automatischer Querführungseingriff wird nur dann durchgeführt, wenn auf Grund der erfassten Umfeldsituation davon ausgegangen werden kann, dass das durch die vermutete Kollision gegebene Gefahrenpotenzial durch den Querführungseingriff reduziert ist. Dadurch lassen sich Folgeschäden bei Kollisionen unter Berücksichtigung der jeweiligen Verkehrssituation vermindern. Dies hat besondere Bedeutung in Verbindung mit dem Fußgängerschutz. Die nachfolgende Vorgehensweise erlaubt es, bei der Entscheidung über die zur Kollisionsvermeidung bzw. -folgenminderung einzuleitenden Maßnahmen die Belange der Fußgänger im besonderen Maße zu berücksichtigen. So wird z.B. auf einen Querführungseingriff verzichtet, wenn dadurch Fußgänger gefährdet werden.

Weitere Vorteile ergeben sich aus den abhängigen Ansprüchen bzw. aus der nachfolgenden Beschreibung von Ausführungsbeispielen.

### Zeichnung

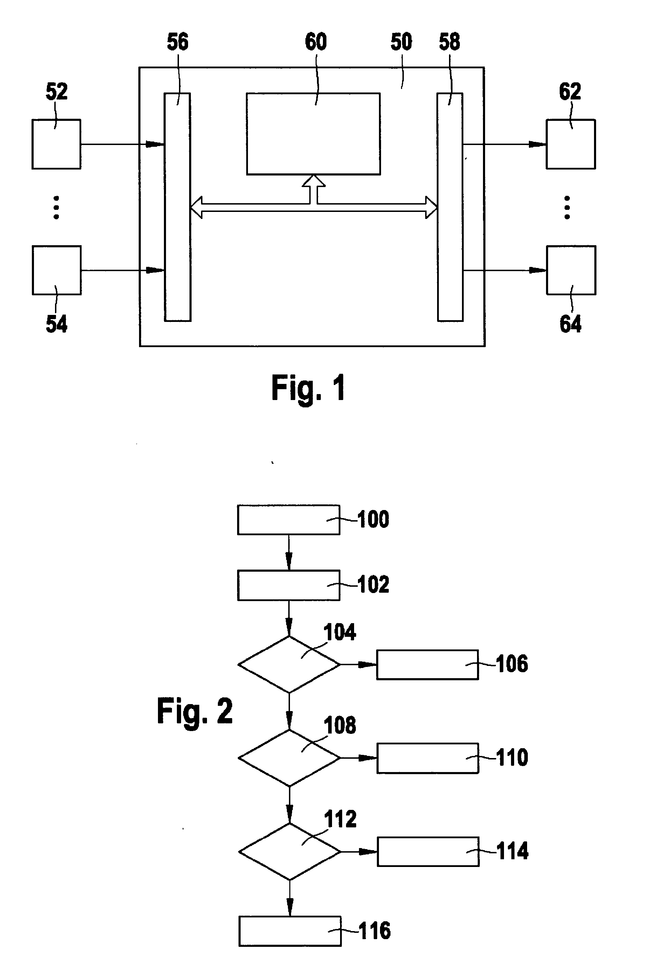

Die Erfindung wird nachfolgend anhand von in der Zeichnung dargestellten Ausführungsbeispielen verdeutlicht. Figur 1 zeigt eine Vorrichtung, in welcher das in Figur 2 dargestellte Ablaufdiagramm realisiert ist.

### Beschreibung von Ausführungsbeispielen

Nachfolgend wird ein Assistenzsystem für Führer von Kraftfahrzeugen beschrieben zur Durchführung eines automatischen Querführungseinriff (im Folgenden auch Lenkeingriff) bei Erkennung eines durch Vollbremsung nicht vermeidbaren Aufpralls des Fahrzeugs auf ein Hindernis. Mit Hilfe wenigstens eines im Fahrzeugs angeordneten Umfeldsensors, z.B. eines Radarsensors, eines Lidarsensors und/oder eines Videosensors, wird die Umfeldsituation erfasst und nachfolgend analysiert. Es werden durch Methoden der Objekterkennung Objekte im Sichtbereich des Sensors erfasst und klassifiziert. Durch Vergleich mit der voraussichtlichen Fahrtrajektorie des mit dem Umfeldsensors ausgestatteten Fahrzeugs wird eine wahrscheinlich nicht vermeidbare Kollision mit einem der erfassten und klassifizierten Objekte erkannt und eine automatische Bremsung des Fahrzeugs eingeleitet.

Eine Kollision wird dabei als nicht vermeidbar erkannt, wenn das Fahrzeug sich auf ein Hindernis zu bewegt und sich in einem Abstandsbereich zum Hindernis befindet, innerhalb dessen das Fahrzeug auch durch eine Vollbremsung nicht zum Stand gebracht werden kann. Dabei wird z.B. auf der Basis des aktuellen Lenkwinkels die voraussichtliche Fahrtrajektorie des Fahrzeugs bestimmt, das in der Fahrtrajektorie befindliche Objekt identifiziert (unter Berücksichtigung der Abmessungen des Fahrzeugs) und der Abstand zu diesem Objekt sowie die Fahrgeschwindigkeit des Fahrzeugs gemessen. Auf der Basis der maximal möglichen Verzögerung des Fahrzeugs durch Bremsung wird dann ermittelt, ob das Fahrzeug innerhalb des Abstandes zum Stillstand kommen kann oder nicht. Im letzteren Fall wird die Kollision als unvermeidbar angenommen.

Ferner wird in diesem Fall die voraussichtliche Aufprallgeschwindigkeit bei Durchführung einer Bremsung bestimmt (aus Fahrgeschwindigkeit, Abstand und Bremsverzögerung). Liegt die Aufprallgeschwindigkeit oberhalb einer vorgegebenen Schwelle, wird geprüft, ob die ermittelte Umfeldsituation ein Ausweichmanöver zulässt. Die Schwelle ist dabei so gewählt, dass bei größeren Aufprallgeschwindigkeit von Schäden auszugehen ist. Dabei kann die Größe des Schwellenwerts auch abhängig vom erkannten Objekt sein, d.h. bei einem Fußgänger als erkanntes Objekt niedriger sein (z.B. nahe oder gleich Null) als bei einem Fahrzeug. Auf Grund der erkannten Art bzw. Klasse (z.B. Lkw, Pkw, Fahrradfahrer, Fußgänger, etc.) eines auf einer möglichen Ausweichtrajektorie sich befindenden Objekt wird ein Gefährdungsgrad ermittelt, anhand dessen über die Durchfiihrung oder Nicht-Durchführung der automatischen Querführung entschieden wird.

Figur 1 zeigt eine Vorrichtung zur Durchführung der oben skizzierten Vorgehensweise. Dabei ist eine Steuereinheit 50 vorgesehen, deren Eingangskomponente 56 Signale von Umfeldsensoren 52 bis 54 zugeführt werden. Diese Sensoren sind je nach Ausführung einer oder mehrere Sensoren, z.B. Video-, Radar-, Ultraschallsensoren. Die Steuereinheit 50 besteht im Wesentlichen aus Eingangskomponente 56, Rechner 60 und Ausgangskomponente 58. Diese Komponenten sind mittels eines Bussystems miteinander verbunden. Über die Ausgangskomponente werden Aktuatoren 62 bis 64, z.B. Bremsen und/oder eine Lenkung angesteuert.

Das nachfolgend skizzierte Programm läuft im Rechner 60 ab, die erwähnten Eingangs- und Ausgangssignale werden über die Komponenten 56 und 58 dem Rechner bzw. dem oder den Aktuatoren zugeführt.

Die Figur 2 zeigt anhand eines Flussdiagramms eine vorteilhafte Realisierung der oben beschriebenen Vorgehensweise als Programm des Rechners 60. Das skizzierte Programm wird bei Betrieb des Fahrerassistenzsystems in vorgegebenen Zeitintervallen durchlaufen.

Im ersten Schritt 100 wird mit Hilfe des Signals wenigstens eines Umfeldsensors, z.B. eines Videosensors mit Objektdetektion, eine voraussichtlich nicht vermeidbare Kollision mit einem erfassten und verfolgten Objekt erkannt und eine automatische Bremsung eingeleitet. In einer Ausführung erfolgt die Feststellung, ob eine nicht vermeidbare Kollision zu befürchten ist, durch Vergleich der auf Grund von Geschwindigkeit und z.B. Lenkwinkel ermittelten Fahrtrajektorie des Fahrzeugs mit den Positionen bzw. dem Verlauf der Positionen der erkannten Objekte. Schneiden sich zu einem Zeitpunkt die Verläufe (unter Berücksichtigung der Abmessungen von Fahrzeug und/oder Objekt), wird (z.B. mittels eines Radar- oder Ultraschallsensors oder durch Auswertung der aufgenommenen Bilder) der Abstande des Fahrzeugs zum Objekt ermittelt. Ist der Abstand kleiner als ein z.B. aus einer möglichen Verzögerung des Fahrzeugs abgeleiteter Sicherheitsabstand, wird eine automatische Bremsung mit einer vorgegebenen, vorzugsweise Abstandabhängiger Verzögerung, eingeleitet.

Im darauf folgenden Schritt 102 wird auf der Basis der Geschwindigkeit des Fahrzeugs, die gemessen wird und über ein Bussystem, der Vorrichtung 50 zugeführt wird, eines vorgegebenen Verzögerungswerts des Fahrzeugs bei automatischer Bremsung, z.B. bei einer Vollbremsung, und des Abstandes die Aufprallgeschwindigkeit ermittelt, d.h. die Geschwindigkeit des Fahrzeugs (bzw. bei einem sich bewegenden Objekt die Relativgeschwindigkeit) bei Bremsung bei zurückgelegtem Abstand. Ist die Aufprallgeschwindigkeit null, kommt das Fahrzeug vor dem Objekt durch die Bremsung zum Stillstand, die Kollision ist vermeidbar. Ergibt sich eine Aufprallgeschwindigkeit größer null, kann innerhalb des Abstandes das Fahrzeug nicht zum Stand gebracht werden, so wird eine Kollision als unvermeidbar angenommen.

Eine andere Möglichkeit besteht darin, aus Fahrzeugdaten wie der Geschwindigkeit und den Raddrehzahlen den Schlupf der Räder (Differenz zwischen Raddrehzahl und Referenzgröße bzw. Geschwindigkeit) sowie den voraussichtlichen Ort zu berechnen, an dem das Fahrzeug voraussichtlich zum Stillstand kommt. Dies erfolgt unter Berechnung der Zeit und des in dieser Zeit zurückgelegten Wegs auf der vermuteten Fahrtrajektorie. Daraus wird der Stillstandspunkt abgeleitet. Liegt dieser Punkt vor dem Schnittpunkt der beiden Trajektoren bzw. dem Ort des Objekt, wird die Kollision als vermeidbar angenommen, ansonsten als unvermeidbar.

Im Schritt 104 wird überprüft, ob sich im Schritt 102 ergeben hat , dass die Kollision durch alleiniges Bremsen, insb. durch eine Vollbremsung oder eine Bremsung mit vorgegebener Verzögerung, vermieden werden kann, oder nicht. Ist dies der Fall, wird gemäß Schritt 106 die Bremsung fortgeführt. Es erfolgen keine weiteren Maßnahmen, die Situation wird beginnend mit Schritt 100 erneut berechnet.

Hat die Berechnung ergeben, dass die Kollision durch eine Bremsung nicht vermieden werden kann, erfolgt in Schritt 108 eine Bewertung des Gefahrenpotenzials. Dabei wird sowohl das Gefährdungspotenzial für sich selbst bzw. das eigene Fahrzeug als auch das Gefährdungspotenzials für andere Verkehrsteilnehmer berücksichtigt.

In einer Ausführung wird hierzu auf der Basis der Objektklassifikation zunächst der Typ des relevanten Objekts (Lkw, Pkw, Fußgänger, etc.) bestimmt und abhängig davon ein Schwellenwert für die Aufprallgeschwindigkeit festgelegt. So wird z.B. bei einem Fußgänger in einer Ausführung ein Wert Null bestimmt. Andererseits wird ein höherer Schwellenwert angenommen, wenn das Objekt ein Lkw ist. Dieser Wert ergibt sich aus der Gefährdung des eigenen Fahrzeugs bzw. seiner Insassen. Die Schwellenwerte sind dabei Erfahrungswerte, die für jeden Fahrzeugtyp und jeden Objekttyp festgelegt werden. Ist die berechnete Aufprallgeschwindigkeit kleiner oder gleich als der Grenzwert, werden keine weiteren Maßnahmen ergriffen und die Bremsung durchgeführt (Schritt 110).

Ist die Aufprallgeschwindigkeit größer als der Schwellenwert, d.h. wird ein höheres Gefährdungspotenzial für das eigene Fahrzeug und/oder den anderen Verkehrsteilnehmer, mit dem eine Kollision unvermeidlich ist, erkannt, wird mit der vorhandenen Umfeldsensorik die Verkehrsituation analysiert. Dabei werden die Objekte in der Umgebung erfasst, klassifiziert und deren Position und/oder Trajektorie mit möglichen Ausweichtrajektorien des Fahrzeugs verglichen. In einer Ausführung ergibt sich eine Ausweichtrajektorie aus einem einzuschlagenden Lenkwinkelverlauf, der es erlaubt, an dem erkannten Hindernis, mit dem eine Kollision höchstwahrscheinlich erfolgt, zu umfahren. Die konkrete Berechnung eines solchen Lenkwinkelverlaufs erfolgt in einer Ausführung dabei wie im eingangs genannten Stand der Technik ausgeführt.

Auf dieses Lenkwinkelverlaufs, der durch die Bremsung vorgegebenen Verzögerung und der oben genannten Daten wird dann die Kollisionswahrscheinlichkeit mit einem in der Ausweichroute liegenden weiteren Objekt ermittelt. Analog zum oben Geschilderten wird auch das Gefährdungspotenzial des eigenen Fahrzeugs und/oder der anderen Verkehrteilnehmer bei Kollision mit diesem Objekt ermittelt (Schritt 112). Ist dieses Gefährdungspotenzial kleiner als das oben ermittelte, wird analog zum eingangs genannten Stand der Technik der Querführungsaktor mit einem Signal beaufschlagt, so dass ein Ausweichen bei Fortführung der Bremsung erfolgt (Schritt 116). Ist das Gefährdungspotenzial auf der Ausweichtrajektorie bzw. allen möglichen Ausweichtrajektorien größer, wird die Bremsung ohne Querführungseingriff weitergeführt (Schritt 114). Die Prüfung, ob das gefährdungspotenzial größer oder kleiner ist, erfolgt durch nach Typ des Objekt gewichteten Schwellenwertvergleich. Bei gleichem Gefährdungspotenzial wird auf das Ausweichen verzichtet. Danach wird das Programm erneut durchlaufen.

## Patentansprüche

1. Verfahren zur Vermeidung und/oder Minderung der Folgen von Kollisionen, das die folgenden Schritte umfasst:
Erkennen (100) mittels wenigstens einem Umfeldsensor (52 bis 54) eine voraussichtlich nicht vermeidbare Kollision mit einem Hindernis, wobei Daten des Hindernisses ermittelt werden und eine automatischen Bremsung eingeleitet wird;
Ermitteln (102) einer Aufprallgeschwindigkeit auf das Hindernis;
Überprüfen (104), ob die Kollision durch die automatische Bremsung vermieden werden kann;
Bewerten (108) eines Gefahrenpotenzials, indem auf Basis einer Objektklassifikation ein Typ des Hindernisses bestimmt und abhängig davon ein Schwellenwert für die Aufprallgeschwindigkeit festgelegt wird, und ein hohes Gefahrenpotenzial angenommen wird, wenn die Aufprallgeschwindigkeit größer als der Schwellenwert ist;
Bestimmen einer Ausweichroute, die es erlaubt, das Hindernis zu umfahren;
Ermitteln einer Kollisionswahrscheinlichkeit mit einem auf der Ausweichroute liegenden Objekt;
Ermitteln (112) eines Gefährdungspotenzials des Fahrzeugs bei Kollision mit dem Objekt;
Fortführen (114) der automatischen Bremsung und Durchführen keines Eingriffs in die Querführung des Fahrzeugs, wenn das Gefährdungspotenzial bei einem Ausweichen größer als das Gefahrenpotenzial ist; und
Durchführen (116) eines dem Hindernis ausweichenden Eingriffs in die Querführung des Fahrzeugs, wenn das Gefährdungspotenzial für das Fahrzeug und für andere Verkehrsteilnehmer geringer als das Gefahrenpotenzial ohne Ausweichvorgang ist.

2. Verfahren nach einem der vorhergehenden Ansprüche, **dadurch gekennzeichnet, dass** das Gefährdungspotenzial auf mehreren zur Verfügung stehenden Ausweichrouten bestimmt wird und das kleinste zur Weiterverarbeitung ausgewählt wird.

3. Verfahren nach Anspruch 2, **dadurch gekennzeichnet, dass** der Querführungseingriff durch Lenkeingriff erfolgt.

4. Vorrichtung zur Vermeidung und/oder Minderung der Folgen von Kollisionen, mit einer Steuereinheit (50), die Signale von wenigstens einem Umfeldsensor (52-54) empfängt und auf der Basis dieser Signale ein Hindernis erkennt und Daten des Hindernisses ermittelt, **dadurch gekennzeichnet, dass** die Steuereinheit (50) derart ausgestaltet ist, dass eine automatischen Bremsung eingeleitet wird eine Aufprallgeschwindigkeit auf das Hindernis ermittelt wird, überprüft wird, ob die Kollision durch die automatische Bremsung vermieden werden kann, ein Gefahrenpotenzial bewertet wird, indem auf Basis einer Objektklassifikation ein Typ des Hindernisses bestimmt und abhängig davon ein Schwellenwert für die Aufprallgeschwindigkeit festgelegt wird, und ein hohes Gefahrenpotenzial angenommen wird, wenn die Aufprallgeschwindigkeit größer als der Schwellenwert ist, eine Ausweichroute bestimmt wird, die es erlaubt, das Hindernis zu umfahren, eine Kollisionswahrscheinlichkeit mit einem auf der Ausweichroute liegenden Objekt ermittelt wird, ein Gefährdungspotenzial des Fahrzeugs bei Kollision mit dem Objekt ermittelt wird, ein Fortführen der automatischen Bremsung und ein Durchführen keines Eingriffs in die Querführung des Fahrzeugs erfolgt, wenn das Gefährdungspotenzial bei einem Ausweichen größer als das Gefahrenpotenzial ist, und ein Durchführen eines dem Hindernis ausweichender Eingriff in die Querführung des Fahrzeugs erfolgt, wenn das Gefährdungspotenzial für das Fahrzeug und das anderer Verkehrsteilnehmer geringer als das Gefahrenpotenzial ohne Ausweichvorgang ist.

## Claims

1. Method for avoiding and/or reducing the consequences of collisions, which comprises the following steps:
detecting (100), by means of at least one surrounding sensor (52 to 54), a collision with an obstacle which is expected to be unavoidable, wherein data are determined on the obstacle and automatic braking is initiated;
determining (102) a speed of impact with the obstacle;
checking (104) whether the collision can be avoided by the automatic braking;
evaluating (108) a potential danger by determining the type of the obstacle on the basis of an object classification and defining a threshold value for the speed of impact as a function thereof, and assuming a high potential danger if the speed of impact is greater than the threshold value;
determining an avoidance route which permits the obstacle to be bypassed;
determining the probability of a collision with an object situated on the avoidance route;
determining (112) a hazard potential of the vehicle when there is a collision with the object;
continuing (114) the automatic braking and not executing an intervention in the lateral guidance of the vehicle if the hazard potential in the case of an avoidance manoeuvre is greater than the potential danger; and
executing (116) an intervention in the lateral guidance of the vehicle so as to avoid the obstacle if the hazard potential for the vehicle and for other road users is lower than the potential danger without an avoidance manoeuvre.

2. Method according to one of the preceding claims, **characterized in that** the hazard potential is determined on a plurality of available avoidance routes and the lowest hazard potential is selected for further processing.

3. Method according to Claim 2, **characterized in that** the lateral guidance intervention is carried out by means of a steering intervention.

4. Device for avoiding and/or reducing the consequences of collisions, having a control unit (50) which receives signals from at least one surrounding sensor (52-54) and on the basis of these signals detects an obstacle and determines data relating to the obstacle, **characterized in that** the control unit (50) is configured in such a way that automatic braking is initiated, a speed of impact with the obstacle is determined, it is checked whether the collision can be avoided by the automatic braking, a potential danger is evaluated by determining the type of the obstacle on the basis of an object classification and defining a threshold value for the speed of impact as a function thereof, and a high potential danger is assumed if the speed of impact is higher than the threshold value, an avoidance route is determined which permits the obstacle to be bypassed, the probability of a collision with an object situated on the avoidance route is determined, a hazard potential of the vehicle is determined when there is a collision with the object, the automatic braking is continued and no intervention in the lateral guidance of the vehicle is executed if the hazard potential during an avoidance manoeuvre is greater than the potential danger, and an intervention into the lateral guidance of the vehicle in order to avoid the obstacle is executed if the hazard potential for the vehicle and that for other road users is lower than the potential danger without an avoidance manoeuvre.

## Revendications

1. Procédé en vue d'éviter et/ou de diminuer les conséquences de collisions, le procédé comprenant les étapes suivantes :
au moyen d'un détecteur d'environnement (52 à 54), détecter (100) qu'une collision avec un obstacle semble impossible à éviter, des données concernant l'obstacle étant déterminées et un freinage automatique étant lancé,
déterminer (102) la vitesse de collision avec l'obstacle,
vérifier (104) si la collision peut être évitée par le freinage automatique,
évaluer (108) le potentiel de danger en déterminant sur base d'une classification d'objets le type de l'obstacle et en définissant sur cette base une valeur de seuil de la vitesse de collision, un potentiel élevé de danger étant supposé si la vitesse de collision est supérieure à la valeur de seuil,
déterminer un parcours d'évitement qui permet de contourner l'obstacle,
déterminer la probabilité d'une collision avec un objet situé sur le parcours d'évitement,
déterminer (112) la potentiel de danger qu'encourt le véhicule en cas de collision avec l'objet,
poursuivre (114) le freinage automatique sans intervenir sur le guidage transversal du véhicule si le potentiel de danger en cas d'évitement est supérieur au potentiel de danger et
effectuer (116) une intervention d'évitement de l'obstacle dans la direction transversale du véhicule si le potentiel de danger pour le véhicule et pour d'autres participants au trafic est inférieur au potentiel de danger sans opération d'évitement.

2. Procédé selon la revendication précédente, **caractérisé en ce que** le potentiel de danger est déterminé sur plusieurs parcours d'évitement disponibles dont le plus court est sélectionné pour la poursuite du traitement.

3. Procédé selon la revendication 2, **caractérisé en ce que** l'intervention sur le guidage transversal s'effectue par intervention sur le volant.

4. Dispositif en vue d'éviter et/ou de diminuer les conséquences de collisions, qui présente une unité de commande (50) qui reçoit des signaux d'au moins un détecteur d'environnement (52-54), qui détecte un obstacle sur base de ces signaux et qui détermine des données concernant l'obstacle,
**caractérisé en ce que**
l'unité de commande (50) est configurée de telle sorte qu'un freinage automatique est lancé,
**en ce que** la vitesse de collision avec l'obstacle est déterminée,
**en ce qu'**il est vérifié si la collision peut être évitée par le freinage automatique,
**en ce que** le potentiel de danger est évalué en déterminant sur base d'une classification d'objets le type de l'obstacle et en définissant sur cette base une valeur de seuil de la vitesse de collision, un potentiel de danger élevé étant supposé si la vitesse de collision est supérieure à la valeur de seuil,
**en ce qu'**un parcours d'évitement qui permet de contourner l'obstacle est déterminé,
**en ce que** la probabilité de collision avec un objet situé sur le parcours d'évitement est déterminée,
**en ce que** le potentiel de danger qu'encourt le véhicule en cas de collision avec l'objet est déterminé,
**en ce que** la poursuite du freinage automatique sans intervention sur la direction transversale du véhicule a lieu si le potentiel de danger en cas d'évitement est supérieur au potentiel de danger et
**en ce qu'**une intervention d'évitement de l'obstacle est effectuée sur le guidage transversal si le potentiel de danger pour le véhicule et d'autres participants au trafic est inférieur au potentiel de danger sans opération d'évitement.
